# EUROPEAN PATENT APPLICATION

(11) **EP 1 322 095 A2**
(43) Date of publication of application: **25.06.2003**
(21) Application number: 02079989.6
(22) Date of filing: 25.11.2002
(51) Int. Cl.: H04L 29/08

(54) **Method and device for information selection**

(30) Priority: 20.12.2001 EP 01205055
(71) Applicant: Koninklijke KPN N.V., 9726 AE Groningen (NL)
(72) Inventor: Aasman, Jannes, 2334 AV Leiden (NL); Verberne, Alan Stefan, 1083 VK Amsterdam (NL); Roos van Raadshooven, Leonard Antonius, 2724 VS Zoetermeer (NL)
(74) Representative: Prins, Adrianus Willem

(57) **Abstract**

System for dissemination of digital documents comprising a user client (1) and a dissemination server (10). The user client comprises I/O means (2) and processing means (3) for processing (viewing, storing, editing etc.) the documents. Logging means (4) register processing events as logging records. Grouping means (5) register document groups or folders in which the relevant documents may be stored. The dissemination server comprises I/O means (11), first document classification means (12) for assigning first classification codes derived form the relevant document's content. Second document classification means (13) receive from the logging means (4) a first subset of the logging records and assign second classification codes. First user profile means (16) receive from the client's grouping means (5) the registered document groups and assign first user interest codes based on those document groups. Second user profile means (17) assign second user interest codes based on a received second subset. Ranking means (19) calculate a ranking value based on the first and/or second classification codes and the first and/or second user interest codes and disseminate documents for which the ranking value goes beyond a ranking threshold.

## Description

### Field of the Invention

The invention refers to a system for dissemination of digital documents (comprising e.g. text, graphics, images, video, music etc.) to participating users, comprising a user client for each participating user, and a dissemination server for all participating users.

### Background of the Invention

Such a system is commonly known e.g. comprising internet clients like Microsoft's Internet Explorer in connection with internet servers like Alta Vista, Yahoo etc.

### Summary of the Invention

The present invention comprises a system in which the users' clients and the dissemination server co-operate in an interactive relevance ranking process, requesting minimal efforts for the user, however resulting in a dissemination of documents to the various participating users which optimally match the users' individual interest profiles. The system performs user profiling, content profiling (e.g classification) and matching of user and content profiles in an unique way, namely
* user profiling without use of explicit user ratings of content,
* user profiling by combining explicit user interest selection and implicit analysis of user actions,
* users are aiding the content profiling process without knowing it,
* content profiling by combining content classification by the users, automatic classification and possibly manual content classification on the side of the documents sources.

User clients may receive documents and their ranking ("recommendations") only if their ranking goes beyond a minimum ranking threshold.

The system's user client may comprise I/O (input/output) means for receiving documents from the dissemination server and/or (directly) from the documents source, processing means for processing the received documents and logging means for registering events of those processing acts in the form of logging records and for delivering those logging records to the dissemination server. The user client also may comprise grouping means for registering, by the user, document groups, corresponding to document folders in which the relevant documents may be stored (saved), and for delivering those document groups ("categories") to the dissemination server.

The system's counterpart, the dissemination server, may comprise I/O means for receiving documents from a documents source (e.g. "the internet" comprising several internet providers), and for the dissemination of selected (matched by ranking) documents to the user clients of the participating users.

Moreover, the dissemination server may comprise first document classification means for assigning, per document received from the documents source, one or more first classification codes (may imply a code "not-classified") under control of or derived from the relevant document's content. The first document classification means may assign first classification codes by content analysis -automatic and/or manual- on the side of the documents source and/or on the dissemination server's side.

The dissemination server may comprise second document classification means for receiving, per document disseminated to the relevant participating users, from the logging means of those users, a first subset of the logging records and assigning one or more second classification codes based on the first subsets of logging records related to the respective disseminated document, received from all relevant participating users. The first subset of the logging records preferrably comprises processing events referring to storing the relevant received documents and the relevant assigned document groups. The ratio of this is that documents which are stored by the users after having received them, are considered to be relevant for the relevant assigned document group (e.g. folder).

The dissemination server may comprise first user profile means for receiving, per user, from the relevant user client's grouping means the registered document groups and assigning first user interest codes based on those document groups received from the relevant user.

The dissemination server may comprise second user profile means for receiving, per user, from the logging means of the relevant user client a second subset of the logging records and assigning one or more second user interest codes based on the received second subset of logging records. Said second subset of the logging records, registered in said logging means, may comprise events referring to viewing, printing, storing and/or modifying the relevant received documents. The ratio is that if a user views, prints, stores and/or modifies (e.g. edits) a document, the subject of the document is a serious factor for the user's interest profile.

The dissemination server may comprise document usage (or popularity) analyzing means for receiving, per document recieved from the documents source, from the logging means of those users, a third subset of the logging records and assigning one or more document usage codes based on the third subsets of logging records related to the respective disseminated document, received from all relevant participating users.

The third subset of the logging records preferably comprises events referring to viewing the relevant received documents. The ratio is that the popularity of documents can be measured by how often they are viewed (visited).

The dissemination server may comprise server side ranking means for calculating, per user-document combination, a ranking value based on said first and/or second classification codes and said first and/or second user user interest codes, and for disseminating the relevant document to each user for which the calculated ranking value goes beyond a ranking threshold. The ranking value may additionally be based on said document usage codes. The ratio is users only are interested in receiving documents which have a certain minimum (personal) interest level (ranking threshold). In other words, the ranking value may be based on one or more document (content) related codes and one or more user (interest) related codes; the ranking value is "filtered" by a minimum (threshold) value, with the result that an automatic document flow is achieved from the documents source(s), via the filtering dissemination server, to the relevant users, which document flow has an optimal ratio between the "recall" (number of documents) and their "precision" (personal relevance for the user).

The server side ranking means, disseminating the relevant document to each user for which the calculated ranking value goes beyond the ranking threshold, may also disseminate the relevant ranking values to client side ranking means, within the user client, for ranking the documents per document group, under control said ranking values, received from the dissemination server.

In the ranking means each record of said first subset of logging records may increase the ranking value with a first increment, each record of said third subset with a second increment and each record of said second subset with a third increment, while, preferably, the second user interest codes are decremented in proportion with the course of time. This option is about similar to a "leaky bucket" algorithm, which is know as such from e.g. policing the flow of ATM cells in ATM networks.

### Brief Description of the Drawings

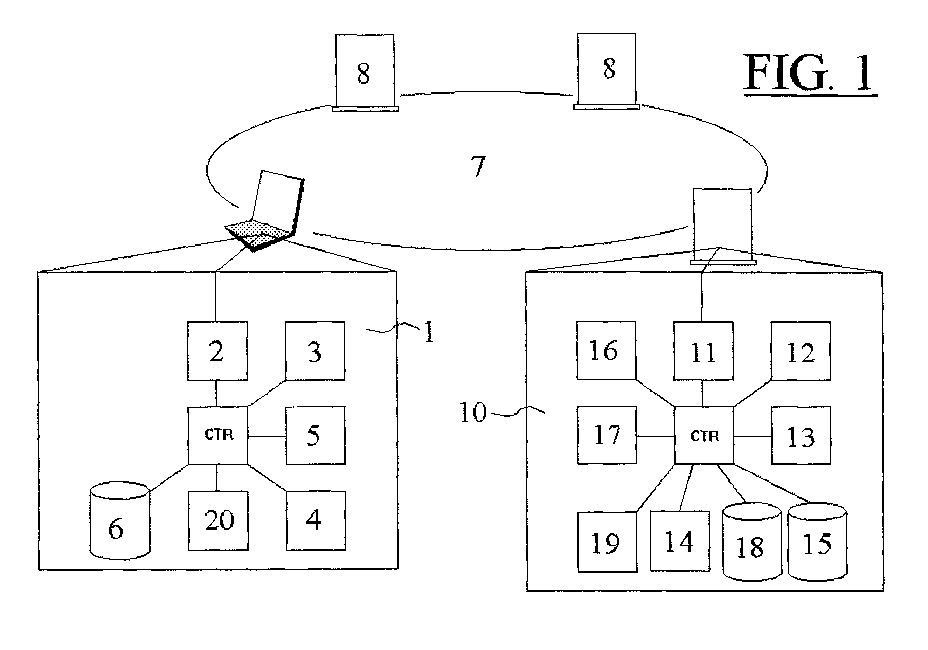

Figure 1 shows a preferred system architecture, comprising a user client 1, a network 7 and a dissemination server 10.

### Detailed Description of the Drawings

### The user client

Figure 1 shows the system's user client 1 comprises an I/O (input/output) module 2, fit for receiving documents from the dissemination server 10. Moreover, the I/O module 2 is fit for sending data to the dissemination server 10. The documents may be processed (viewed, printed, stored, edited etc.) by a processing module 3 and a logging module 4 for registering events of those processing acts (view, print, save, edit etc.) in the form of (event) logging records and for delivering those logging records to the dissemination server (to be discussed below).

The user client 1 also comprises a grouping module 5 fit for registering (assigning), by the user, document groups (classification codes, classifiers), corresponding to document folders in which the relevant documents may be stored (saved). Moreover, those document groups, indicating the various user-made document classes or categories, are delivered to the dissemination server, which enables the dissemination server to keep track on the user's document classification scheme and preferences. The documents, the document groups and ranking values (to be discussed below) may be stored in a database 6.

The actions of the various modules within the user client 1 are co-ordinated/controlled by a system control module CTR.

### The dissemination server

Figure 1 also shows a dissemination server 10, the counterpart of the user client 1, connected via a network 7 (e.g. the internet).

The dissemination server 10 comprises an I/O module 11 for receiving digitized documents (texts, graphics, music, video-clips etc.) from a documents source (e.g. the internet, comprising various content delivery servers 8. The I/O module 11, moreover, enables dissemination (sending) of selected (matched by ranking) documents to the user clients of the participating users.

### Document profile (or classification) modules

The dissemination server 10 comprises a first document classification module 12 for assigning, per document recieved from the documents source 6, one or more first classification codes (e.g. keywords, classifiers, thesaurus terms etc.) under control of the relevant document's content. The first classification module 12 assigns first classification codes by content analysis -automatic and/or manual- on the side of the documents source (the servers 8) and/or on the dissemination server's side.

The dissemination server 10 also comprises a second document classification module 13 for receiving, per document disseminated to the relevant participating user clients 1, from the logging module 4 of those users, a first subset of the logging records and assigning one or more second classification codes based on the first subsets of logging records related to the respective disseminated document, received from all relevant participating users. The first subset of the logging records comprises processing events referring to storing the relevant received documents, including the relevant document groups, in accordance with the relevant users' classification schemes. The ratio of this is that documents which are stored by the users after having received them, are considered to be relevant for the documents classes (corresponding to the storage folders) concerned. In this way documents are linked to the categories (classes) as preferred by the user withoud requesting any user actions.

The dissemination server 10 may also comprise a usage (or popularity) analyzing module 14 for receiving, per document received by the relevant participating users, from the logging module 4 of those users, a third subset of the logging records and assigning one or more document usage codes based on the third subsets of logging records related to the respective disseminated document, received from all relevant participating users. The third subset of the logging records comprises events referring to viewing the relevant received documents. The ratio is that the popularity of documents can be measured by how often they are viewed (visited).

The results of modules 12, 13 and 14, called document or content profiles, are stored, per received document, in a document profile database 15.

### User profile modules

The dissemination server 10 comprises a first user profile module 16 for receiving, per user, from the relevant user client's grouping module 5 the document groups registered there, and for assigning first user interest codes based on those document groups (e.g classifications) as received from the relevant user.

The dissemination server also comprises a second user profile module 17, fit for receiving, per user, from the logging module 4 of the relevant user client a second subset of the logging records and for assigning one or more second user interest codes based on the received second subset of logging records. Said second subset of the logging records preferably comprises events referring to viewing, printing, storing and/or modifying the relevant received documents. The ratio of that is that if a user views, prints, stores and/or modifies (e.g. edits) a document, the subject of the document is a serious factor for the user's interest profile.

The results of modules 15 and 16, called the user profile, are stored, per user, in a user profile database 18.

### Ranking

The dissemination server comprises a ranking module 19, enabled for calculating, per user-document combination, a ranking value based on said first and/or second classification codes, resulting from modules 12 and 13 respectively, and/or said document usage codes, resulting from module 14, and (based on) said first and/or second user interest codes, resulting from modules 16 and 17 respectively, and for disseminating documents to each user for which the calculated ranking value goes beyond a certain ranking threshold. The ratio is that users only are interested in receiving documents which have a certain minimum user related interest level, set by the ranking threshold.

The ranking value may be based on one or more document (content) related codes and one or more user (interest) related codes, which ranking value is "filtered" by a minimum (threshold) value, by which an automatic document flow is achieved from the documents source(s), via the filtering dissemination server, to the relevant users, which document flow has an optimal ratio between the "recall" (number of documents) and their "precision" (relevance for the user).

The server side ranking module 19, disseminating the relevant document to each user for which the calculated ranking value goes beyond the ranking threshold, may also disseminate the relevant ranking values to a client side ranking module 20, within the user client 1, for ranking the documents per document group (folder), under control of said ranking values, received from the dissemination server 10. In this way the documents, sent to the user client 1, will always have at least a minimum relevance level and, moreover, will be ranked, under control of ranking module 20, within the relevant document folders/groups according to each document's particular ranking value, received (together with reception of the document itself) from the server's ranking module 19.

In the server side's ranking module 19 each record of said first subset of logging records may increase the ranking value with a first increment, while each record of said third subset may increase the ranking value with a second increment and each record of said second subset may increase the ranking value with a third increment. In this way the different kinds of logged events -pointing to different kinds of document handling (visiting, saving, editing, printing etc.) have different effects on the ranking level. Preferably, the second user interest code may be decremented, within module 20, in proportion with the course of time, so that the longer a certain document has not been visited or used otherwise by the user, its ranking is lowered and so does the document's ranking place within the relevant folder or group.

The actions of the various modules within the dissemination server 10 are co-ordinated/controlled by a system control module CTR.

## Claims

1. System for dissemination of digital documents to participating users, comprising a user client (1) for each participating user, and a dissemination server (10) for all participating users,
the user client comprising
I/O means (2) for receiving documents from the dissemination server and/or documents source, and for delivering data to the dissemination server (18),
processing means (3) for processing the received documents, and
logging means (4) for registering events of processing acts in the form of logging records and for delivering those logging records to the dissemination server,
grouping means (5) for registering, by the user, document groups, corresponding to document folders in which the relevant documents may be stored, and for delivering those document groups to the dissemination server, and
the dissemination server comprising
I/O means (11) for receiving documents from a documents source and for dissemination of selected documents to the user clients of the participating users,
first document classification means (12) for assigning, per document received from the documents source, one or more first classification codes derived from the relevant document's content,
first user profile means (16) for receiving, per user, from the relevant user client's grouping means (5) the registered document groups and assigning first user interest codes based on those document groups received from the relevant user,
server side ranking means (19) for calculating, per user-document combination, a ranking value based on said first classification codes and said first user user interest codes, and for disseminating the relevant document to each user for which the calculated ranking value goes beyond a ranking threshold.

2. System according to claim 1, the dissemination server, moreover, comprising second document classification means (13) for receiving, per document disseminated to the relevant participating users, from the logging means (4) of those users, a first subset of the logging records and assigning one or more second classification codes based on the first subsets of logging records related to the respective disseminated document, received from all relevant participating users, and
second user profile means (17) for receiving, per user, from the logging means (4) of the relevant user client a second subset of the logging records and assigning one or more second user interest codes based on the received second subset of logging records,
said server side ranking means (19) being fit for calculating, per user-document combination, a ranking value based on said first and/or second classification codes and said first and/or second user user interest codes, and for disseminating the relevant document to each user for which the calculated ranking value goes beyond a ranking threshold.

3. System according to claim 1, comprising usage analyzing means (14) for receiving, per document received by the relevant participating users, from the logging means (4) of those users, a third subset of the logging records and assigning one or more document usage codes based on the third subsets of logging records related to the respective disseminated document, received from all relevant participating users, while said ranking value is also based on said document usage codes.

4. System according to claim 1, comprising that the said server side ranking means (19), disseminating the relevant document to each user for which the calculated ranking value goes beyond the ranking threshold, also disseminates the relevant ranking value to client side ranking means (20), for ranking the documents per document group, under control said ranking values, received from the dissemination server.

5. System according to claim 1, comprising that said first subset of the logging records, registered in said logging means (4), comprise processing events referring to storing the relevant received documents, including the relevant document groups.

6. System according to claim 3, comprising that said third subset of the logging records, registered in said logging means (4), comprise events referring to viewing the relevant received documents.

7. System according to claim 3, comprising that said second subset of the logging records, registered in said logging means (4), comprise events referring to modifying the relevant received documents.

8. System according to claim 3, comprising that said second subset of the logging records, registered in said logging means (4), comprise events referring to printing the relevant received documents.

9. System according to claim 3, comprising that said second subset of the logging records, registered in said logging means (4), comprise events referring to storing the relevant received documents.

10. System according to claim 1, comprising that each record of said first subset of logging records increases the ranking value with a first increment, each record of said third subset of logging records increases the ranking value with a second increment and each record of said second subset of logging records increases the ranking value with a third increment.

11. System according of claim 1, comprising that the second user interest codes are decremented, by the server side ranking means (19) and/or by the client side ranking means (20) in proportion with the course of time.
